# EUROPÄISCHE PATENTSCHRIFT

(11) **EP 1 141 591 B1**
(45) Veröffentlichungstag und Bekanntmachung des Hinweises auf die Patenterteilung: **25.09.2002**
(21) Anmeldenummer: 99967959.0
(22) Anmeldetag: 18.12.1999
(51) Int. Cl.: F16H 61/12, F16H 61/00

(54) **HYDRAULIKSTEUERUNG FÜR EIN STUFENLOS VERÄNDERLICHES GETRIEBE**
HYDRAULIC CONTROL FOR A CONTINUOUSLY VARIABLE TRANSMISSION
SYSTEME DE COMMANDE HYDRAULIQUE POUR UNE TRANSMISSION A VARIATION CONTINUE

(30) Priorität: 22.12.1998 DE 19859425
(43) Veröffentlichungstag der Anmeldung: 10.10.2001
(73) Patentinhaber: ROBERT BOSCH GMBH, 70442 Stuttgart (DE); Van Doorne's Transmissie B.V., 5000 AM Tilburg (NL)
(72) Erfinder: LUH, Joachim, D-74321 Bietigheim-Bissingen (DE); VAN WIJK, Wilhelmus, Johannes, Maria, NL-5071 AN Udenhout (NL)
(86) Internationale Anmeldenummer: EP9910104
(87) Internationale Veröffentlichungsnummer: WO00037834

(56) Entgegenhaltungen:
- DE-A- 4 410 311
- DE-A- 19 519 162
- DE-A- 19 609 787
- US-A- 4 733 582

## Beschreibung

### Stand der Technik

Die Erfindung betrifft eine Hydrauliksteuerung für ein stufenlos veränderliches Getriebe gemäß den unabhängigen Ansprüchen. Aus der DE 195 19 162 A1 ist eine Hydrauliksteuerung für ein stufenlos veränderliches Getriebe, insbesondere für ein Doppelkegelscheiben-Umschlingungsgetriebe bekannt. Es wird vorzugsweise beim Ausfall der elektrischen Versorgung einer elektrohydraulischen Steuerung des stufenlosen Getriebes eingesetzt. Die Hydrauliksteuerung weist eine Pumpe zur Beaufschlagung der Kolbenräume einer ersten und zweiten Verstellvorrichtung zur Übersetzungsänderung des Getriebes auf. Zur Steuerung des Druckes in dem Kolbenraum der ersten Verstellvorrichtung ist ein Mittel in Form eines Ventils vorgesehen, das mit einem an einer Drosselstelle erzeugten Druckgefälle steuerbar ist. In der ersten Regelstellung verbindet das Ventil den Kolbenraum der ersten Verstellvorrichtung über eine dem Ventil nachgeschaltete Leitung mit der Pumpe.

Die wirksame Fläche des Kolbenraumes der ersten Verstellvorrichtung ist größer als die wirksame Fläche des Kolbenraumes der zweiten Verstellvorrichtung. Ist das Ventil zur Steuerung des Drucks im Kolbenraum der ersten Verstellvorrichtung voll durchgeschaltet, herrscht in beiden Kolbenräumen der gleiche Druck. Deshalb ergibt sich an der ersten Verstellvorrichtung die größere resultierende Druckkraft. Die Übersetzung des Getriebes ist dadurch geneigt, größer zu werden, d.h. ins Schnelle zu übersetzen. Entweder sinkt dadurch die Motordrehzahl bei gleicher Fahrgeschwindigkeit oder bei gleicher Motordrehzahl steigt die Fahrgeschwindigkeit. Gewisse Zwischenwerte sind hierbei auch möglich.

Das an der Drosselstelle erzeugte Druckgefälle ist im wesentlichen proportional zur Motordrehzahl. Dreht der Motor hoch, so ist das Druckgefälle hoch. Das Ventil schaltet durch und das Übersetzungsverhältnis wird kleiner. Nimmt das Druckgefälle bei niedriger Motordrehzahl ab, so entweicht der Druck über das Ventil für den Notbetrieb, das Übersetzungsverhältnis des Getriebes nimmt zu. Das kleinste Übersetzungsverhältnis des Getriebes wird hier mit "Low" bezeichnet, die größte mit "Overdrive".

Wird bei einer schnellen Fahrt von Vorwärtsfahrt in Neutral geschaltet, wird auch automatisch ausgekuppelt. Dabei kann auch die Motordrehzahl absinken. Dadurch schaltet das Ventil so, daß der Druck im Kolbenraum der ersten Verstellvorrichtung sinkt und die resultierende Druckkraft kleiner als die Druckkraft im Kolbenraum der zweiten Verstellvorrichtung wird. Das Übersetzungsverhältnis des Getriebes wird nach "Low" verstellt. Wird nun wieder von Neutral nach Vorwärtsfahrt geschaltet, so wird eingekuppelt. Da das Übersetzungsverhältnis des Getriebes bei "Low" ist, dreht die Eingangswelle dann wesentlich schneller als die Ausgangswelle. Die Motordrehzahl steigt dadurch rapide an. Dies kann zu mechanischen Schäden führen, die Sicherheit gefährden und wird von Insassen des Fahrzeugs als unkomfortabel empfunden, da das Fahrzeug abrupt verzögert.

Ferner ist bei dieser Hydrauliksteuerung nur eine Pumpe vorgesehen, die zum einen die Kolbenräume der Verstellvorrichtungen speist und zum andern für die Ventile der Hydrauliksteuerung verwendet wird. Deshalb muß zur Erfüllung beider Aufgaben eine Hochdruckpumpe vorgesehen werden. Da somit, insbesondere an den Steuereingängen der Ventile höhere Drücke anstehen, führt dies zu hohen Leckagen. Außerdem hat dies auch einen erhöhten Kraftstoffverbrauch zur Folge.

Ferner ist in der WO 97/34093 eine Hydrauliksteuerung offenbart, die im Betriebszustand Vorwärtsfahrt für eine Verstellung des Getriebes in Richtung "Overdrive" Mittel in Form eines Ventils mit einer ersten Schaltstellung aufweist. Eine Verstellung des Getriebes Richtung "Low" ist nur über eine zusätzliche Schaltstellung des Ventils möglich, wodurch das Ventil jedoch aufwendiger und somit teurer wird. Befindet sich dieses Ventil im Betriebszustand Neutral, so hat dies auch zur Folge, daß das Getriebe in die "Overdrive"-Übersetzung geht. Mittel zur Verhinderung einer Verstellung in Richtung "Low", was auch beinhaltet, daß die Übersetzung konstant bleibt, sind nicht vorgesehen.

### Vorteile der Erfindung

Die erfindungsgemäße Hydrauliksteuerung gemäß den unabhängigen Ansprüchen hat demgegenüber den Vorteil, daß nach dem Schalten, insbesondere bei einer schnellen Fahrt, vom Betriebszustand Vorwärtsfahrt oder ggf. Rückwärtsfahrt wenigstens in den Betriebszustand Neutral ein unerwünschtes Verstellen des Getriebes nach "Low" ganz oder zumindest weitestgehend vermieden wird und daß im Betriebszustand Vorwärtsfahrt eine Verstellung des Getriebes Richtung "Overdrive" sowie "Low" in einer Schaltstellung möglich ist.

Dies läßt sich besonders einfach dadurch realisieren, daß ein Schaltventil, insbesondere ein Handschaltventil, mit vier Schaltstellungen für die Betriebszustände Parken P, Rückwärtsfahrt R, Neutral N und Vorwärtsfahrt D vorgesehen ist. Hierbei ist es vorteilhaft vorzusehen, daß in der zweiten Regelstellung des Ventils die Zwischenleitung am Anschluß des Ventils mit einem Abflußanschluß des Ventils verbunden ist, daß der Abflußanschluß über eine Leitung, in der vorzugsweise eine Drossel angeordnet ist, mit einem ersten Anschluß des Schaltventils verbunden ist, der in den Schaltstellungen P und N verschlossen ist und der in den Schaltstellungen R und D mit einem zweiten Anschluß verbunden ist, der zu einem niedrigeren Druckniveau z.B. einem Tank führt, verbunden ist.

Bei einem weiteren Ausführungsbeispiel ist in der zweiten Regelstellung des Ventils der Anschluß verschlossen, wodurch eine noch einfachere Ausbildung möglich ist. Hierbei ist es vorteilhaft, wenn an einer Zwischenleitung eine Abzweigleitung, in der vorzugsweise eine Drossel angeordnet ist, angeschlossen ist, die mit einem ersten Anschluß des Schaltventils verbunden ist, der in den Schaltstellungen P und N verschlossen ist und der in den Schaltstellungen R und D über einen zweiten Anschluß mit einem Tank verbunden ist.

Es ist gemäß einem weiteren Ausführungsbeispiel besonders zweckmäßig, an der Zwischenleitung eine Abzweigleitung anzuschließen, die über eine Verbindungsleitung mit der Leitung verbunden ist, die der Drosselstelle in Förderrichtung nachgeschaltet ist und in der Verbindungsleitung eine Drossel anzuordnen. Dabei ist es von Vorteil, wenn zwischen der Drossel und der Drosselstelle eine Leitung abzweigt, die an einen zweiten Steuereingang des Ventils führt. Hierbei ist es von Nutzen, zwischen der Drossel und der Drosselstelle eine Leitung anzuschließen, die an einen zweiten Anschluß des Schaltventils führt, die in den Schaltstellungen P, R und N mit einem ersten Anschluß verbunden ist, an dem eine Steuerleitung angeschlossen ist, die mit einem dritten Steuereingang des Ventils verbunden ist und daß der erste Anschluß in der Schaltstellung D mit einem Tankanschluß verbunden ist.

Sind die Versorgungsleitungen der Kolbenräume mit einem Druckanschluß eines Druckbegrenzungsventils verbunden, so läßt sich der Druck, insbesondere im Kolbenraum der zweiten Verstellvorrichtung so einstellen, daß das Übertragungsmittel keinem unnötigem Verschleiß ausgesetzt ist.

Es ist vorteilhaft, wenn die Drosselstelle in einem Umschaltventil mit zwei Schaltstellungen angeordnet ist. An einem ersten Steuereingang des Umschaltventils ist hierbei eine Feder und an dessen zweiten Steuereingang eine elektrische oder hydraulische Betätigung vorgesehen. Das Umschaltventil weist in zweckmäßiger Weise einen ersten Druckanschluß und einen ersten Anschluß auf, die in der ersten Schaltstellung über die Drosselstelle und in der zweiten Schaltstellung über eine im wesentlichen druckabfallfreie Verbindung miteinander verbunden sind. Es ist vorteilhaft eine erste Steuerleitung vorzusehen, die in Förderrichtung vor dem Umschaltventil angeschlossen ist und mit dem ersten Steuereingang des Ventils verbunden ist, und in Förderrichtung nach dem Umschaltventil eine zweite Steuerleitung anzuordnen, die mit dem zweiten Steuereingang des Ventils verbunden ist.

Ein einfacher Aufbau ergibt sich hierbei dadurch, daß die zweite Steuerleitung, die in Förderrichtung dem Umschaltventil nachgeschaltet ist, mit einem zweiten Druckanschluß des Umschaltventils zu verbinden, der in der ersten Schaltstellung mit einem zweiten Anschluß in Verbindung steht, der über die Steuerleitung mit dem zweiten Steuereingang des Ventils verbunden ist. Der zweite Druckanschluß ist dabei in der zweiten Schaltstellung des Umschaltventils verschlossen. Das Umschaltventil weist ferner einen Tankanschluß auf, der in der ersten Schaltstellung verschlossen ist und in der zweiten Schaltstellung mit dem zweiten Anschluß in Verbindung steht.

Für den Einsatz im Notbetrieb ist es vorteilhaft, wenn eine Abzweigleitung, die mit dem Kolbenraum der ersten Verstellvorrichtung in Verbindung steht, an einem dritten Druckanschluß des Umschaltventils angeschlossen ist. Der Druckanschluß steht in der ersten Schaltstellung mit einem dritten Anschluß in Verbindung und in der zweiten Schaltstellung ist er verschlossen. Der dritte Anschluß ist hierbei über eine Leitung mit dem zweiten Steuereingang des Druckbegrenzungsventils verbunden. In der zweiten Schaltstellung des Umschaltventils ist der dritte Anschluß mit dem Tankanschluß des Umschaltventils verbunden.

Ist die Drosselstelle einer zweiten Pumpe nachgeschaltet, die einen niedrigeren Druckbereich erzeugt als die mindestens erste Pumpe, wobei es sich bei der ersten Pumpe zweckmäßigerweise um eine Hochdruckpumpe und bei der zweiten Pumpe um eine Niederdruckpumpe handeln kann, ergeben sich in vorteilhafter Weise sehr geringe Leckagen. Außerdem hat dies zur Folge, daß der Kraftstoffverbrauch sinkt.

Es ist zweckmäßig, wenn der Drosselstelle ein zusätzliches Druckbegrenzungsventil nachgeschaltet ist.

Die Hydrauliksteuerung wird nochmals vereinfacht, wenn das Ventil für den Notbetrieb auch für den Normalbetrieb verwendet wird.

Weitere Vorteile und vorteilhafte Weiterbildungen der erfindungsgemäßen Hydrauliksteuerung ergeben sich aus den Unteransprüchen und der Beschreibung.

### Zeichnung

Ausführungsbeispiele der Erfindung sind in der Zeichnung dargestellt und in der nachfolgenden Beschreibung näher erläutert. Es zeigen
- Figur 1: ein erstes Ausführungsbeispiel einer Hydrauliksteuerung,
- Figur 2: ein zweites Ausführungsbeispiel einer Hydrauliksteuerung und
- Figur 3: ein drittes Ausführungsbeispiel einer Hydrauliksteuerung.

### Beschreibung der Ausführungsbeispiele

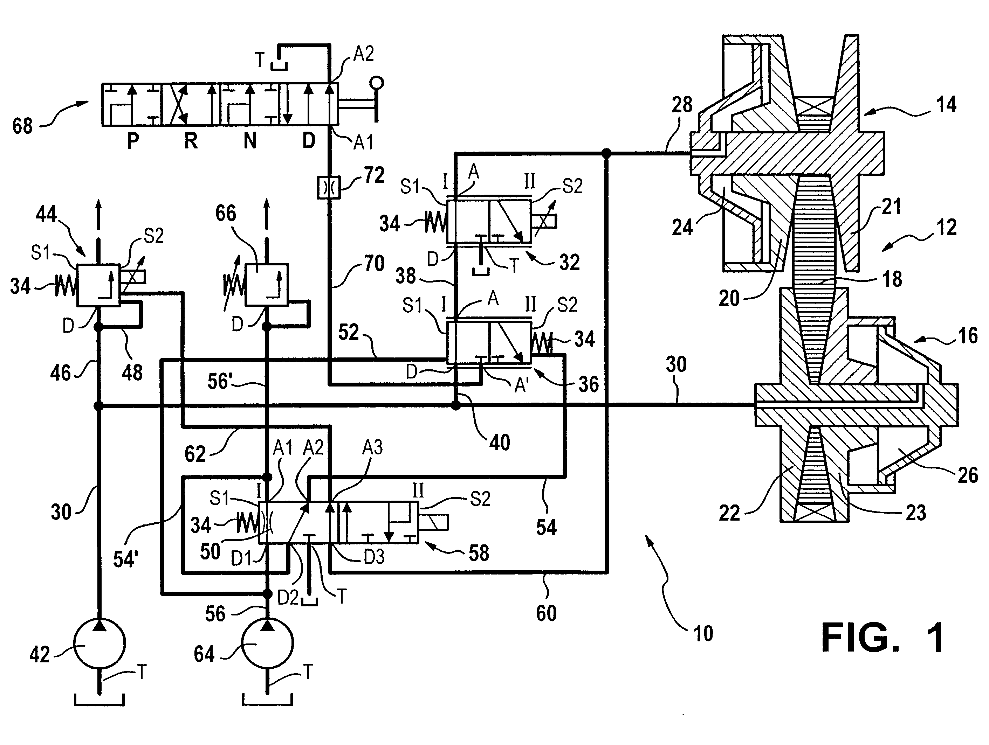

In der Figur 1 ist als erstes Ausführungsbeispiel der Ausschnitt einer Hydrauliksteuerung 10 für ein stufenlos veränderliches Getriebe 12 dargestellt. Die Hydrauliksteuerung 10 wird vorzugsweise bei einem Ausfall der elektrischen Versorgung einer elektrohydraulischen Steuerung des stufenlos veränderlichen Getriebes 12 eingesetzt. Es ist jedoch auch denkbar, die Hydrauliksteuerung 10 für den Normalbetrieb des Getriebes 12 zu verwenden.

Im vorliegenden Ausführungsbeispiel handelt es sich um ein sogenanntes Doppelkegelscheiben-Umschlingungsgetriebe, das auch als Variator oder CVT-Getriebe bezeichnet wird. Es ist jedoch auch denkbar, daß statt eines Doppelkegelscheiben-Umschlingungsgetriebes ein anderes stufenlos veränderliches Getriebe, wie beispielsweise ein Kegelreibrad-Umlaufgetriebe oder dergleichen verwendet wird. Das Getriebe 12 weist eine erste und eine zweite Verstellvorrichtung 14, 16 auf. Die erste Verstellvorrichtung 14 ist auf einer antriebsseitigen Welle und die zweite Verstellvorrichtung 16 auf einer abtriebsseitigen Welle des Getriebes 12 angeordnet. Das Getriebe 12 umfaßt zwei Kegelscheibenpaare, zwischen denen ein Übertragungsmittel 18, beispielsweise ein Schubgliederband, eine Kette, ein Keilriemen oder dergleichen, angeordnet ist. Beide Kegelscheibenpaare bestehen jeweils aus zwei Kegelscheiben 20, 21, 22, 23, die hydraulisch gegeneinander verspannbar ausgebildet sind. Die dazu notwendigen Kolben- und Zylinderteile sind vorzugsweise zumindest in einem Teil der Kegelscheiben 20, 23 integriert. Die von diesen Teilen eingeschlossenen Kolbenräume, auf der Primärseite der mindestens eine Kolbenraum 24 und auf der Sekundärseite der Kolbenraum 26, werden entsprechend der eingestellten Übersetzung mit dem jeweiligen Arbeitsdruck beaufschlagt. Die wirksame Fläche des Kolbenraumes 24 der ersten Verstellvorrichtung 14 ist in der Regel größer als die wirksame Fläche des Kolbenraumes 26 der zweiten Verstellvorrichtung 16. Es gibt auch Getriebe, die in einer ersten Verstellvorrichtung zwei Kolbenräume aufweisen, wobei sich wiederum insgesamt eine größere wirksame Fläche ergibt.

Sind die primärseitigen Kegelscheiben 20, 21 dicht beisammen und die sekundärseitigen Kegelscheiben 22, 23 weit voneinander entfernt, so läuft das Übertragungsmittel 18 primärseitig auf einem großen und sekundärseitig auf einem kleinen Radius. Dadurch ist das Übersetzungsverhältnis des Getriebes 12, d.h. das Verhältnis der Eingangs- zur Ausgangsdrehzahl groß, der größte Wert wird hier mit "Overdrive" bezeichnet. Sind die primärseitigen Kegelscheiben 20, 21 weit voneinander entfernt und die sekundärseitigen Kegelscheiben 22, 23 dicht beisammen, so läuft das Übertragungsmittel primärseitig auf einem kleinen und sekundärseitig auf einem großen Radius. Dadurch ist das Übersetzungsverhältnis des Getriebes 12, d.h. das Verhältnis der Eingangs- zur Ausgangsdrehzahl niedrig, der niedrigste Wert wird hier mit "Low" bezeichnet.

An dem Kolbenraum 24 der ersten Verstellvorrichtung 14 ist eine Versorgungsleitung 28 und am Kolbenraum 26 der zweiten Verstellvorrichtung 16 ist eine Versorgungsleitung 30 angeschlossen. Die Versorgungsleitung 28 für den Kolbenraum 24 der ersten Verstellvorrichtung 14 ist an einem Anschluß A eines Ventils 32 für den Normalbetrieb angeschlossen. Bei dem Ventil 32 für den Normalbetrieb handelt es sich im vorliegenden Ausführungsbeispiel um ein Regelventil, wobei auch ein Proportionalventil oder Schaltventil denkbar ist. Das Ventil 32 hat zwei Regelstellungen I, II. An einem Steuereingang S1 ist eine als Druckfeder ausgebildete Feder 34 angeordnet und an einem zweiten Steuereingang S2 ist eine magnetische Betätigung vorgesehen, wobei auch eine elektrohydraulische Betätigung möglich ist. In der ersten Regelstellung I ist der Anschluß A mit einem Druckanschluß D verbunden. Ein Tankanschluß T ist hierbei verschlossen. In der zweiten Regelstellung II ist der Anschluß A mit dem Tankanschluß T verbunden und der Druckanschluß D ist verschlossen. Ist der zweite Steuereingang S2 nicht betätigt, so wird das Ventil 32 aufgrund der Federkraft der Druckfeder 34 in die Regelstellung I gebracht.

Das Ventil 32 für den Normalbetrieb ist einem Ventil 36, das zumindest für den Notbetrieb - gegebenenfalls auch für den Normalbetrieb - verwendet wird, nachgeschaltet. Es ist auch möglich, daß das Ventil 36 dem Ventil 32 nachgeschaltet ist. Im vorliegendem Ausführungsbeispiel ist hierfür der Druckanschluß D des Ventils 32 für den Normalbetrieb über eine Zwischenleitung 38 an einem Anschluß A des Ventils 36 angeschlossen. Von einem Druckanschluß D des Ventils 36 führt eine Verbindungsleitung 40 zur Versorgungsleitung 30 für den Kolbenraum 26 der zweiten Verstellvorrichtung 16.

Die Versorgungsleitung 30 ist mit einer ersten Pumpe 42 zur Beaufschlagung der Kolbenräume 24, 26 verbunden. Bei der ersten Pumpe 42 handelt es sich um eine Hochdruckpumpe. Der von der ersten Pumpe 42 gelieferte Druckbereich liegt in einem Bereich von ca. 4 bis 80 bar. Dieser Druckbereich ist für die ausreichende Versorgung der Kolbenräume 24, 26 notwendig, so daß die Übersetzung des Getriebes 12 verändert werden kann und noch ein ausreichender Anpreßdruck der Kegelscheiben 20, 21, 22, 23 auf das Übertragungsmittel 18 vorhanden ist. Die erste Pumpe 42 ist somit über die Versorgungsleitungen 30, 28 - die Zwischenleitung 38 und die Verbindungsleitung 40 sind in diesem Sinne auch Versorgungsleitungen - mit den Kolbenräumen 24, 26 der ersten und zweiten Verstellvorrichtung 14, 16 zur Übersetzungsänderung des Getriebes 12 verbunden. Die Versorgungsleitung 30 versorgt insofern auch den Kolbenraum 24 mit Druckmittel.

Wenigstens die Versorgungsleitung 30 ist mit einem Druckanschluß D eines Druckbegrenzungsventiles 44 verbunden. Dies erfolgt im vorliegenden Ausführungsbeispiel über eine Leitung 46. Am ersten Steuereingang S1 des Druckbegrenzungsventils 44 ist eine als Druckfeder ausgebildete Feder 34 angeordnet. Am zweiten Steuereingang S2 ist eine elektrische oder hydraulische Betätigung sowie eine Rückführleitung 48, die mit der Leitung 46 oder direkt mit der Versorgungsleitung 30 in Verbindung steht, vorgesehen.

Das Ventil 36 dient im Notbetrieb zur Steuerung des Druckes in dem Kolbenraum 24 der ersten Verstellvorrichtung 14 und ist seinerseits in bekannter Weise mit einem an einer Drosselstelle 50 erzeugten Druckgefälle steuerbar. Über die wenigstens eine Zwischenleitung 38, die an den Anschluß A des Ventils 36 angeschlossen ist, ist das Ventil 36 mit dem Kolbenraum 24 der ersten Verstellvorrichtung 14 verbunden. In einer ersten Regelstellung I ist hierzu der Druckanschluß D mit dem Anschluß A und somit der Kolbenraum 24 mit der Pumpe 42 verbunden. Das Ventil 36 weist auf der Seite des Druckanschlusses D noch einen Abflußanschluß A' auf, der in der ersten Regelstellung I des Ventils 36 verschlossen ist. Ein erster Steuereingang S1 des Ventils 36 wird von einer ersten Steuerleitung 52 und ein zweiter, gegenüberliegender Steuereingang S2 wird von einer zweiten Steuerleitung 54 beaufschlagt. Zusätzlich ist an diesem zweiten Steuereingang S2 eine Feder 34 vorgesehen. Die erste Steuerleitung 52 steht mit einer Hydraulikleitung 56 in Verbindung, die in Förderrichtung vor der Drosselstelle 50 angeordnet ist. Die Drosselstelle 50 ist vorzugsweise in einem Umschaltventil 58 angeordnet. Insofern ist die erste Steuerleitung 52 in Förderrichtung auch vor dem Umschaltventil 58 angeschlossen. Das Umschaltventil 58 weist zwei Schaltstellungen I und II auf. Am ersten Steuereingang S1 des Umschaltventils 58 ist eine Feder 34 und am zweiten Steuereingang S2 eine elektrische oder hydraulische Betätigung vorgesehen. Das Umschaltventil 58 weist mindestens einen ersten Druckanschluß D1 und einen ersten Anschluß A1 auf, die in der ersten Schaltstellung I über die Drosselstelle 50 und in der zweiten Schaltstellung II über eine wenigstens im wesentlichen druckabfallfreie Verbindung miteinander verbunden sind.

Die in Förderrichtung der Drosselstelle 50 bzw. dem Umschaltventil 58 nachgeschaltete Hydraulikleitung 56' ist in vorteilhafter Weise über eine Steuerleitung 54' mit einem zweiten Druckanschluß D2 des Umschaltventils 58 verbunden. Der zweite Druckanschluß D2 steht in der ersten Schaltstellung I des Umschaltventils 58 mit einem zweiten Anschluß A2 des Umschaltventils 58 in Verbindung. Der zweite Anschluß A2 ist über die zweite Steuerleitung 54 mit dem zweiten Steuereingang S2 des Ventils 36 verbunden. Der zweite Druckanschluß D2 ist in der zweiten Schaltstellung II des Umschaltventils 58 verschlossen. Weiterhin weist das Umschaltventil 58 einen Tankanschluß T auf, der in der ersten Schaltstellung I verschlossen ist und in der zweiten Schaltstellung II des Umschaltventils mit dem zweiten Anschluß A2 in Verbindung steht.

Für den Notbetrieb ist es wichtig, daß die erste Steuerleitung 52 vorgesehen ist, die in Förderrichtung vor dem Umschaltventil 58 angeschlossen ist und mit dem ersten Steuereingang S1 des Ventils 36 verbunden ist, und daß in Förderrichtung nach dem Umschaltventil 58 die zweite Steuerleitung 54, 54' angeordnet ist, die mit dem zweiten Steuereingang S2 des Ventils 36 verbunden ist. Vorteilhaft ist es hierbei, daß die zweite Steuerleitung 54' bzw. die Hydraulikleitung 56' die beide in Förderrichtung dem Umschaltventil 58 bzw. der Drosselstelle 50 nachgeschaltet sind, mit dem zweiten Druckanschluß D2 des Umschaltventils 58 verbunden sind.

Es ist eine Abzweigleitung 60 vorgesehen, die mit der ersten Versorgungsleitung 28 verbunden ist und somit mit dem Kolbenraum 24 der ersten Verstellvorrichtung 14 in Verbindung steht. Die Abzweigleitung 60 ist an einem dritten Druckanschluß D3 des Umschaltventils 58 angeschlossen. Der dritte Druckanschluß D3 steht in der ersten Schaltstellung I mit einem dritten Anschluß A3 in Verbindung und ist in der zweiten Schaltstellung II verschlossen. Der dritte Anschluß A3 ist über eine Leitung 62 mit dem zweiten Steuereingang S2 des Druckbegrenzungsventils 44 und in der zweiten Schaltstellung II des Umschaltventils 58 mit dem Tankanschluß T des Umschaltventils 58 verbunden. Auf diese Weise läßt sich der Druck des Kolbenraums 24 der ersten Verstellvorrichtung 14 auf den zweiten Steuereingang S2 des Druckbegrenzungsventils 44 leiten. Somit läßt sich der Druck im Kolbenraum 26 und indirekt im Kolbenraum 24 regeln, wodurch sich insbesondere hohe, das Übertragungsmittel 18 schädigende Drücke, vermeiden lassen.

Die Drosselstelle 50 bzw. das Umschaltventil 58 sind einer zweiten Pumpe 64 nachgeschaltet, die einen niedrigeren Druckbereich erzeugt, als die erste Pumpe 42. Bei der zweiten Pumpe handelt es sich um eine sogenannte Niederdruckpumpe, die einen Druckbereich von ca. 2 bis 7 bar erzeugen kann. Die erste Pumpe 42 dient somit der Versorgung der Kolbenräume 24, 26, wo hohe Drücke benötigt werden, und die zweite Pumpe 64 der Versorgung der Ventile 36, 58 mit denen die Drücke in den Kolbenräumen 24, 26 gesteuert werden. Zwar ist es auch möglich, die Hydraulikleitung 56 und somit die Ventile 36, 58 mit dem hohen Druckniveau der Pumpe 42 zu beaufschlagen. Durch die Verwendung der zweiten Pumpe 64, die eine bereits vorhandene Pumpe sein kann, treten jedoch viel geringere Leckagen auf. Dadurch können auch die Ventile 36, 58 günstiger dimensioniert werden. Außerdem hat dies zur Folge, daß der Kraftstoffverbrauch sinkt.

Der Drosselstelle 50 bzw. dem Umschaltventil 58 ist über die Hydraulikleitung 56' ein zusätzliches Druckbegrenzungsventil 66 nachgeschaltet. Dadurch läßt sich in vorteilhafter Weise auch das Druckniveau an den Steuereingängen des Ventils 36 regulieren.

Für die Betriebszustände Parken P, Rückwärtsfahrt R, Neutral N und Vorwärtsfahrt D ist eine als Schaltventil 68 ausgebildete Vorrichtung vorgesehen, wobei es sich im vorliegenden Ausführungsbeispiel um ein Handschaltventil handelt. Es ist durchaus üblich und an und für sich bekannt, ein Ventil für die genannten Betriebszustände zu verwenden. Es ist jedoch auch denkbar, statt einer derartigen Vorrichtung eine andere Vorrichtung oder mehrere Vorrichtungen für die Betriebszustände Parken P, Rückwärtsfahrt R, Neutral N und Vorwärtsfahrt D vorzusehen. Beispielsweise kann für jeden Betriebszustand ein separates Ventil vorgesehen werden oder es können beispielsweise auch elektromotorische Steller eingesetzt werden, die die Aufgaben des Schaltventils 68 übernehmen. Die Verwendung des Schaltventils 68 ist jedoch sehr günstig, da dadurch nur eine Vorrichtung für die Betriebszustände Parken P, Rückwärtsfahrt R, Neutral N und Vorwärtsfahrt D erforderlich ist. Das Schaltventil 68 hat mindestens vier Schaltstellungen P, R, N, D für den jeweiligen Betriebszustand Parken P, Rückwärtsfahrt R, Neutral N und Vorwärtsfahrt D. Es kommt vor, daß ein Fahrzeug mit einem eingangs beschriebenen Getriebe 12 noch weitere Übersetzungen aufweist, die beispielsweise durch ins Langsame übersetzende Zahnradpaare realisiert werden. Dadurch können sich Vorteile zum Beispiel bei steilen Anstiegen oder Lasten ergeben. Dadurch kann es sein, daß für den Betriebszustand Vorwärtsfahrt mehrere Vorwärtsgänge vorhanden sind. Diese sind hier unter dem Begriff Vorwärtsfahrt D zusammengefaßt. Falls das Schaltventil 68 auch zusätzliche Vorwärtsgänge schaltet, so können diese zum Beispiel durch zusätzliche Schaltstellungen D1, D2 usw., 1, 2, usw. 1, 3, oder 2, 4 usw. realisiert werden.

Das Schaltventil 68 weist mindestens einen ersten Anschluß A1 und einen gegenüberliegenden zweiten Anschluß A2 auf. Der zweite Anschluß A2 führt zu einem niedrigen Druckniveau z.B. Tank T oder kann auch direkt als Tankanschluß T ausgeführt sein. In den Schaltstellungen R und D sind der erste und der zweite Anschluß A1, A2 miteinander verbunden und in den Schaltstellungen P und N verschlossen, was alternativ auch in der Schaltstellung R möglich ist. Es ist auch denkbar, daß der erste und der zweite Anschluß A1, A2 in der Schaltstellung P miteinander verbunden sind. Durch die Anschlüsse A1, A2 lassen sich auf einfache Weise mehrere zusätzliche Aufgaben erfüllen.

In der zweiten Regelstellung II des Ventils 36 ist die Zwischenleitung 38 am Anschluß A des Ventils 36 mit dem Abflußanschluß A' des Ventils 36 verbunden. Der Abflußanschluß A' ist über eine Leitung 70, in der vorzugsweise eine Drossel 72 angeordnet ist, mit dem ersten Anschluß A1 des Schaltventils 68 verbunden.

Im Normalbetrieb, d.h. wenn eine elektrische Versorgung für eine elektrohydraulische Steuerung des stufenlosen Getriebes 12 vorhanden ist, befindet sich das Umschaltventil 58 aufgrund der elektrischen oder hydraulischen Betätigung am zweiten Steuereingang S2 in der Schaltstellung II. Hierbei sind die Anschlüsse A2, A3 mit dem Tankanschluß T in Verbindung. Dadurch werden die zweite Steuerleitung 54 und die Leitung 62 entleert. Nun kann der Begrenzungsdruck des Druckbegrenzungsventils 44 über die elektrische oder hydraulische Betätigung am zweiten Steuereingang S2 verändert werden. Somit wird über das Druckbegrenzungsventil 44 der Druck in der Versorgungsleitung 30 und somit dem Kolbenraum 26 der zweiten Verstellvorrichtung 16 eingestellt. Der Druck wird hierbei so variiert, daß ein ausreichender Anpreßdruck für das Übertragungsmittel 18 vorhanden ist. Der Druck ist jedoch so niedrig wie möglich, so daß das Übertragungsmittel 18 keinem unnötigen Verschleiß ausgesetzt wird.

Da auch die zweite Steuerleitung 54 des Ventils 36 mit dem Tankanschluß T des Umschaltventils 58 verbunden ist, wird das Ventil 36 aufgrund des Druckes in der Hydraulikleitung 56 und der ersten Steuerleitung 52, die den ersten Steuereingang S1 des Ventils 36 beaufschlagt, in die erste Regelstellung I gebracht. Der in der Steuerleitung S1 herrschende Druck wird durch das zusätzliche Druckbegrenzungsventil 66 eingestellt. Da es sich bei der zweiten Pumpe 64 um eine Niederdruckpumpe handelt, treten am Ventil 36 nur sehr geringe Leckagen auf. Dadurch lassen sich in vorteilhafter Weise einfachere und kostengünstigere Bauteile für die Hydrauliksteuerung 10 verwenden.

Mit dem Ventil 32 für den Normalbetrieb wird der Ölzulauf und Ölablauf im Kolbenraum 24 der ersten Verstellvorrichtung 14 eingestellt, wodurch die Übersetzung des Getriebes 12 veränderbar ist. Die entsprechende Regelstellung I, II wird durch die elektrische oder hydraulische Betätigung am zweiten Steuereingang S2 sowie der Federkraft der Feder 34 am ersten Steuereingang S1 eingestellt.

Im Notbetrieb, d.h. beim Ausfall der elektrischen Versorgung der elektrohydraulischen Steuerung des stufenlosen Getriebes 12, wird das Umschaltventil 58 aufgrund der Federkraft der Feder 34 am ersten Steuereingang S1 in die Schaltstellung I gebracht. Dadurch liegt über die Versorgungsleitung 28, die Abzweigleitung 60, den dritten Druckanschluß D3 sowie den dritten Anschluß A3 des Umschaltventils 58 und die Leitung 62 der Druck im Kolbenraum 24 der ersten Verstellvorrichtung 14 am zweiten Steuereingang S2 des Druckbegrenzungsventils 44 an. Dadurch ergibt sich eine übersetzungsabhängige Einstellung bzw. Veränderung des Drucks im Kolbenraum 26 der zweiten Verstellvorrichtung 16, der über die Versorgungsleitung 30 und die Leitung 46 am Druckanschluß D des Druckbegrenzungsventils 44 ansteht. Das Druckbegrenzungsventil 44 stellt also ein Mittel zur Regelung der Übersetzung des Getriebes 12 dar.

Das Ventil 32 für den Normalbetrieb wird im Notbetrieb über die Federkraft der Feder 34 am ersten Steuereingang S1 in die Regelstellung I gebracht. Die Einstellung des Drucks im Kolbenraum 24 der ersten Verstellvorrichtung 14 erfolgt nun über das Ventil 36. Die Regelstellungen I, II des Ventils 36 werden hierbei über die am ersten Steuereingang S1 und am zweiten Steuereingang S2 anstehenden Drücke eingestellt. Die Drücke werden hierbei durch das an der Drosselstelle 50 anstehende Druckgefälle bestimmt. Dieses Druckgefälle wiederum hängt vom Ölvolumenstrom ab, der durch die Hydraulikleitung 56, 56' fließt. Der Ölvolumenstrom wird durch die Förderleistung der zweiten Pumpe 64 bestimmt, welche wiederum abhängig von der Drehzahl der Pumpe ist. Da die Pumpe 64 von einem Motor, insbesondere einem Verbrennungsmotor, angetrieben wird, ist das Druckgefälle an der Drosselstelle 50 abhängig von der Drehzahl des Motors. Bei einer hohen Drehzahl des Motors wird das Ventil 36 aufgrund des gegenüber dem Öldruck in der zweiten Steuerleitung 54 höheren Öldrucks als in der ersten Steuerleitung 52, der auch die Feder 34 überdrückt, in die Regelstellung I gebracht. Dadurch herrschen in den Kolbenräumen 24, 26 die gleichen Drücke. Da der Kolbenraum 24 der ersten Verstellvorrichtung 14 eine größere wirksame Fläche hat als der Kolbenraum 26 der zweiten Verstellvorrichtung 16, nimmt das Getriebe 12 ein Übersetzungsverhältnis an, das Richtung "Overdrive" geht, wodurch gegebenenfalls die Drehzahl des Motors wiederum verringert wird.

Bei niedrigen Drehzahlen des Motors geht das Ventil 36 in die Regelstellung II, wodurch Öl aus dem Kolbenraum 24 der ersten Verstellvorrichtung 14 abfließen kann. Das Öl fließt hierbei vom Abflußanschluß A' des Ventils 36 über die Leitung 70 an den ersten Anschluß A1 des Schaltventils 68. In den Schaltstellungen R und D, die den Betriebszuständen Rückwärtsfahrt R und Vorwärtsfahrt D entsprechen, kann das Öl über den zweiten Anschluß A2 zum Tank T fließen. Das Öl muß nicht unbedingt zum Tank T abfließen. Es reicht aus, wenn es auf einen gegenüber dem Kolbenraum 24 niedrigeren Druck bzw. ein niedrigeres Druckniveau geleitet wird, so daß es abfließen kann. Bei einer bereits geschilderten, alternativen Ausbildung des Schaltventils 68 findet dies nur in der Schaltstellung D statt. Durch die entsprechende Wahl der Größe der Drossel 72 kann auf einfache Weise die Geschwindigkeit beeinflußt werden, mit der das Getriebe 12 ein Übersetzungsverhältnis, das Richtung "Low" geht, annimmt. Diese Geschwindigkeit wird auf für den Fahrer komfortable Werte eingestellt. Das Ventil 36 ist somit ein Mittel, das eine Verstellung des Getriebes Richtung "Overdrive" sowie "Low" im Betriebszustand D bzw. R ermöglicht.

Ist das Schaltventil 68 in der Schaltstellung P oder N, so ist der Anschluß A1 verschlossen. Ist hierbei das Ventil 36 in der zweiten Regelstellung II, so ist die Zwischenleitung 38 blockiert. Somit kann über die Zwischenleitung 38 und die Versorgungsleitung 28 kein Öl aus dem Kolbenraum 24 der ersten Verstellvorrichtung 14 entweichen. Dadurch kann das Übersetzungsverhältnis des Getriebes 12 nicht Richtung "Low" verstellt werden. Wird zum Beispiel bei einer schnellen Fahrt von der Schaltstellung D in die Schaltstellung N geschaltet, so wird ausgekuppelt. Sinkt dabei auch die Motordrehzahl beispielsweise auf Leerlaufdrehzahl ab, so sinkt das Druckgefälle an der Drosselstelle 50 ab, wodurch das Ventil 36 in die Regelstellung II gebracht wird. Wäre an dem Abflußanschluß A' beispielsweise ein Tank angeordnet, so könnte Öl aus dem Kolbenraum 24 der ersten Verstellvorrichtung 14 abfließen. Dadurch würde das Übersetzungsverhältnis des Getriebes 12 Richtung "Low" gehen. Würde dann wieder in die Schaltstellung D geschaltet und eingekuppelt, so würde der Motor schlagartig sehr hoch drehen müssen, was sich beispielsweise durch ein Aufheulen des Motors äußern würde. Durch das Blockieren der Zwischenleitung 38 in den Betriebszuständen P oder N bzw. durch die entsprechenden Schaltstellungen des Schaltventils 68 und in der zweiten Regelstellung II des Ventils 36 wird dies in vorteilhafter Weise vermieden. Zusammenfassend kann also gesagt werden, daß insbesondere das Schaltventil 68 mit den zugehörigen Leitungen 28, 38, 70 einer Verhinderung einer Verstellung des Getriebes 12 in Richtung "Low" zumindest im Betriebszustand Neutral bzw. Parken dient. Alternativen zur Verwendung des Schaltventils 68 wurden bereits erläutert.

Statt die Zwischenleitung 38 und somit den Kolbenraum 24 über das Schaltventil 68 zu blockieren, sind auch andere Maßnahmen möglich. Beim Schalten in den Betriebszustand N wird auch die Kupplung des Fahrzeugs ausgekuppelt. Durch das Nutzen eines Signals, das den ausgekuppelten Zustand darstellt, kann die Zwischenleitung 38 oder aber die Versorgungsleitung 28, die in diesem Fall ebenfalls als Zwischenleitung fungiert, durch ein zusätzliches Schaltventil, das in einer Schaltstellung durchschaltet und in einer anderen Schaltstellung sperrt, die Zwischenleitung 38 bzw. 28 blockiert werden. Dies kann beispielsweise dadurch erfolgen, daß der Ansteuerdruck an und für sich bekannter hydraulischer Kupplungen ausgenutzt wird, um dieses zusätzliche Ventil zu schalten. Es ist auch denkbar, daß eine Verstellung des Übersetzungsverhältnisses des Getriebes 12 in Richtung "Low" im Notbetrieb nur in der Schaltstellung D des Schaltventils 68 bzw. nur im Betriebszustand D möglich ist. Sind Mittel vorgesehen, durch die gewährleistet ist, daß nur in die Schaltstellung D geschaltet werden kann, wenn das Fahrzeug steht, so kann diese Verstellung des Getriebes 12 auch in dieser Schaltstellung bzw. bei diesem Betriebszustand ermöglicht werden. Dadurch ist auch das Anfahren in einer für das Fahrzeug unter Umständen günstigeren Übersetzung möglich.

Es versteht sich von selbst, daß das Ventil 32 für den Normalbetrieb auch ganz entfallen kann und die Steuerung des Getriebes 12 auch im Normalbetrieb lediglich über das Ventil 36 vorgenommen wird.

Wesentlich beim ersten Ausführungsbeispiel ist, daß zusätzliche Mittel vorgesehen sind, die eine Verstellung des Getriebes 12 in Richtung "Low" zumindest im Betriebszustand Neutral verhindern. Dies zu verhindern, ist jedoch auch im Betriebszustand Parken vorteilhaft. Gegebenenfalls kann dies ebenfalls im Betriebszustand Rückwärtsfahrt zweckmäßig sein. Die zusätzlichen Mittel verhindern eine Verstellung des Getriebes 12 dadurch, daß das Druckniveau des Kolbenraumes 24 der ersten Verstellvorrichtung 14 nicht auf ein niedrigeres Druckniveau wie beispielsweise einen Tank T geschaltet wird. Hierzu muß in einer Leitung 28, 38, 70 eine Vorrichtung wie zum Beispiel das Ventil 68 vorgesehen sein, daß zumindest im Betriebszustand Neutral verschlossen ist. Wenigstens im Betriebszustand Vorwärtsfahrt schaltet dieses Ventil 68 zur Verstellung des Getriebes 12 Richtung "Low" das Druckniveau des Kolbenraumes 24 auf ein niedrigeres Druckniveau wie zum Beispiel einem Tank T.

Anders ausgedrückt sind beim ersten Ausführungsbeispiel zusätzliche Mittel vorgesehen, die eine Verstellung des Getriebes 12 in Richtung "Low" nur im Betriebszustand Vorwärtsfahrt D ermöglichen. Eine solche Verstellung im Betriebszustand Rückwärtsfahrt R ist jedoch auch möglich. Ist eine Einrichtung vorgesehen, die den Betriebszustand Parken P bzw. die Schaltstellung P des Schaltventils 68 nur bei Stillstand des Fahrzeugs ermöglicht, so kann die Verstellung auch hier erfolgen. Die zusätzlichen Mittel sind im wesentlichen die Verbindung des Anschlusses A mit dem Abflußanschluß A' des Ventils 36 in der Regelstellung II und die Leitung 70, die bei den entsprechenden Betriebszuständen Vorwärtsfahrt D sowie gegebenenfalls Rückwärtsfahrt R und eventuell Parken P mit einem niedrigeren Druck bzw. Druckniveau oder Tank T verbunden sind.

Für eine detailliertere Beschreibung der Funktion der Hydrauliksteuerung 10 im Notbetrieb bezüglich der Veränderung der Übersetzung des Getriebes 12, insbesondere was das Verhalten des Ventils 36 in Abhängigkeit vom Druckgefälle an der Drosselstelle 50 sowie dem Druckbegrenzungsventil 44 betrifft, wird im übrigen ausdrücklich auf die Offenbarung der DE 195 19 162 A1 bzw. US 5,971,876 verwiesen.

Alternativ zum Ventil 36 können auch beide Kolbenräume 24, 26 über Versorgungsleitungen 28, 30 mit Druck beaufschlagt werden, die nicht voneinander abhängen. An jedem Kolbenraum 28, 30 kann dann noch ein separates Druckbegrenzungsventil vorgesehen werden, das einen Steuereingang aufweist, da von einem beispielsweise von der Drehzahl abhängigen Druck oder einer anderen Regelgröße beaufschlagt wird. Solche Ausbildungen sind Stand der Technik.

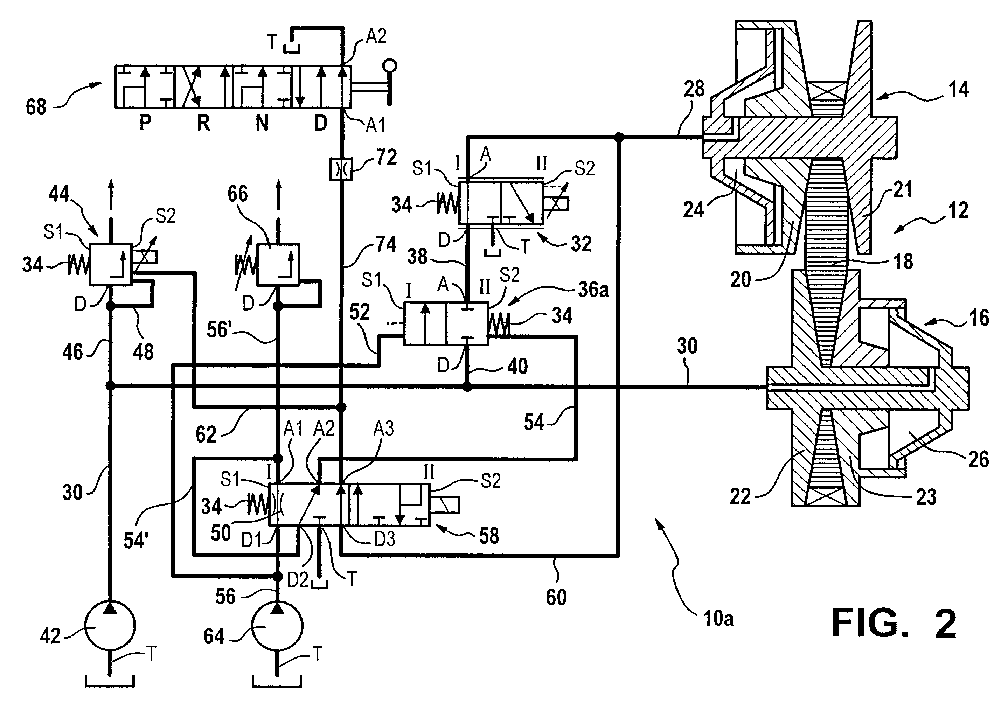

In der Figur 2 ist ein zweites Ausführungsbeispiel einer Hydrauliksteuerung 10a dargestellt. Die Hydrauliksteuerung 10a unterscheidet sich nur geringfügig von der Hydrauliksteuerung 10. So sind die Pumpen 42, 64, die Druckbegrenzungsventile 44, 66, das Umschaltventil 58, das Schaltventil 68, das Ventil 32 für den Normalbetrieb sowie das Getriebe 12 so wie bei der Figur 1 bereits beschrieben ausgeführt. Bei der Figur 2 entfällt die Leitung 70. Ansonsten sind alle Leitungen gleich, sowohl bei der Figur 1 als auch bei der Figur 2.

Anstelle des Ventils 36 ist ein Ventil 36a vorgesehen. Das Ventil 36a weist einen ersten Steuereingang S1 und einen zweiten Steuereingang S2 auf, die ebenfalls von der ersten Steuerleitung 52 bzw. der zweiten Steuerleitung 54 beaufschlagt werden. Am zweiten Steuereingang S2 ist ebenfalls eine Feder 34 vorgesehen. In der ersten Regelstellung I ist der Druckanschluß D mit dem Anschluß A verbunden. In der zweiten Regelstellung II sind sowohl der Druckanschluß D als auch der Anschluß A verschlossen.

Eine Leitung 74 ist am Anschluß A1 des Schaltventils 68 angeschlossen. In der Leitung 74 ist vorzugsweise ebenfalls eine Drossel 72 angeordnet. Die Leitung 74 ist an der Leitung 62, die zum zweiten Steuereingang S2 des Druckbegrenzungsventils 44 führt, angeschlossen. In der ersten Schaltstellung I des Umschaltventils 58 ist die Leitung 74 somit mit der Abzweigleitung 60 verbunden. Wesentlich hierbei ist, daß an der Zwischenleitung 38 oder an der Versorgungsleitung 28 die Abzweigleitung 60 angeschlossen ist, die mit dem ersten Anschluß A1 des Schaltventils 68 verbunden ist, wobei die Verbindung im vorliegenden Ausführungsbeispiel über die Leitungen 62, 74 erfolgt. Der erste Anschluß A1 des Schaltventils ist in den Schaltstellungen P und N verschlossen, wobei es insbesondere auf ein Verschließen in der Schaltstellung N ankommt, und ist in den Schaltstellungen R und/oder D über einen zweiten Anschluß A2 mit einem niedrigen Druckniveau z.B. Tank T verbunden.

Ist im Notbetrieb das Ventil 36a in der Regelstellung I, so kann das Getriebe 12, wie auch bei der Figur 1 beschrieben, eine größere Übersetzung annehmen bzw. der Motor eine niedrigere Drehzahl. In der Regelstellung II des Ventils 36a ist der Anschluß A verschlossen, wodurch die Zwischenleitung 38 bzw. die Versorgungsleitung 28 blockiert ist. In den Schaltstellungen R und D des Schaltventils 68 kann dabei Öl über die Versorgungsleitung 28, die Abzweigleitung 60, die Leitungen 62, 74 und das Schaltventil 68 zum Tank T abfließen. Durch das Ventil 36a kann das Getriebe 12 im Notbetrieb bei den Schaltstellungen P und N höchstens eine größere Übersetzung annehmen. Das Ventil 36a hat den Vorteil, daß es sehr einfach ausgeführt ist. Die Abläufe sind ansonsten so wie bei der Figur 1 bereits beschrieben.

Wesentlich beim zweiten Ausführungsbeispiel ist, daß zusätzliche Mittel vorgesehen sind, die eine Verstellung des Getriebes 12 in Richtung "Low" zumindest im Betriebszustand Neutral verhindern. Dies zu verhindern, ist jedoch auch im Betriebszustand Parken vorteilhaft. Gegebenenfalls kann dies ebenfalls im Betriebszustand Rückwärtsfahrt zweckmäßig sein. Die zusätzlichen Mittel verhindern eine Verstellung des Getriebes 12 dadurch, daß das Druckniveau des Kolbenraumes 24 der ersten Verstellvorrichtung 14 nicht auf ein niedrigeres Druckniveau wie beispielsweise einen Tank T geschaltet wird. Hierzu muß in einer Leitung 28, 38, 60, 74, die zum Kolbenraum 24 der ersten Verstellvorrichtung 14 führt oder an diesem selber, eine Vorrichtung wie zum Beispiel das Ventil 36a bzw. 68 vorgesehen sein, das zumindest im Betriebszustand Neutral verschlossen ist. Wenigstens im Betriebszustand Vorwärtsfahrt schaltet das Ventil 68 zur Verstellung des Getriebes 12 Richtung "Low" das Druckniveau des Kolbenraumes 24 auf ein niedrigeres Druckniveau wie zum Beispiel einem Tank T.

Anders ausgedrückt sind beim zweiten Ausführungsbeispiel zusätzliche Mittel vorgesehen, die eine Verstellung des Getriebes 12 in Richtung "Low" nur im Betriebszustand Vorwärtsfahrt D ermöglichen. Eine solche Verstellung im Betriebszustand Rückwärtsfahrt R ist jedoch auch möglich. Ist eine Einrichtung vorgesehen, die den Betriebszustand Parken P bzw. die Schaltstellung P des Schaltventils 68 nur bei Stillstand des Fahrzeugs ermöglicht, so kann die Verstellung auch hier erfolgen. Hierzu muß in einer Leitung 28, 38, 60, 74, die zum Kolbenraum 24 der ersten Verstellvorrichtung 14 führt oder an diesem selber, eine Vorrichtung wie zum Beispiel das Ventil 68 vorgesehen sein, die zumindest im Betriebszustand Vorwärtsfahrt zur Verstellung des Getriebes 12 Richtung "Low" das Druckniveau des Kolbenraumes 24 auf ein niedrigeres Druckniveau wie zum Beispiel einem Tank T schaltet.

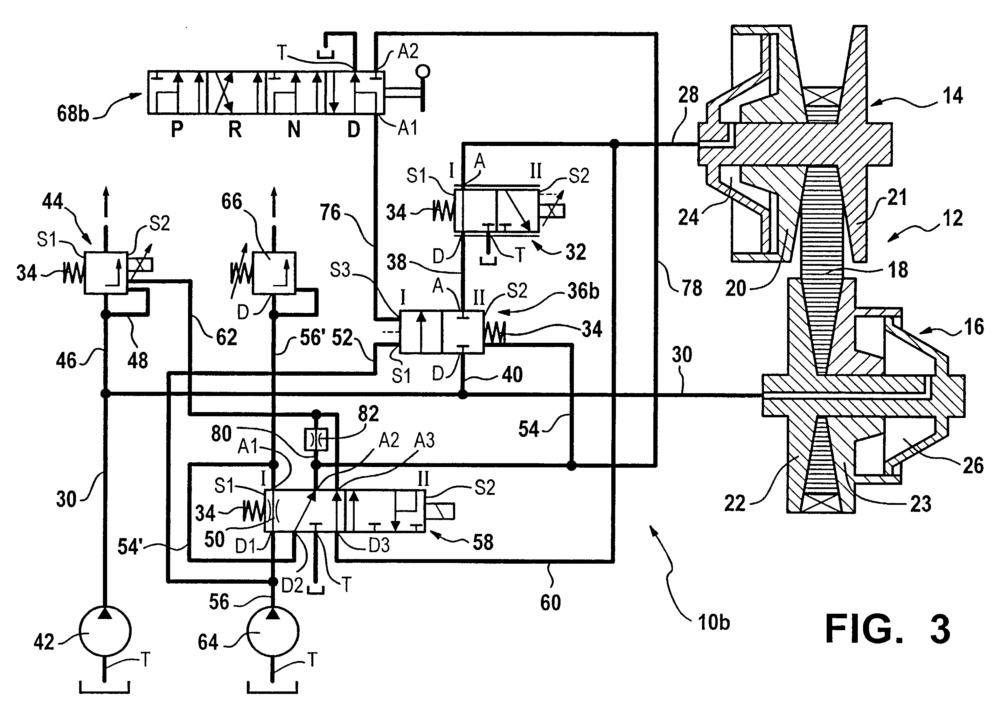

In der Figur 3 ist ein drittes Ausführungsbeispiel einer Hydrauliksteuerung 10b dargestellt. Die Pumpen 42, 64, die Druckbegrenzungsventile 44, 66, das Umschaltventil 58, das Ventil 32 für den Normalbetrieb sowie das Getriebe 12 sind genauso aufgebaut und miteinander verbunden, wie beim ersten Ausführungsbeispiel und bei der Figur 1 bereits beschrieben. Die Leitung 70 aus der Figur 1 entfällt.

Anstelle des Ventils 36 aus der Figur 1 wird ein Ventil 36b eingesetzt. Das Ventil 36b hat zwei Regelstellungen I, II. In der ersten Regelstellung I ist ein Druckanschluß D mit einem Anschluß A verbunden. In der zweiten Regelstellung II sind sowohl der Druckanschluß D als auch der Anschluß A verschlossen. Das Ventil 36b weist einen ersten Steuereingang S1 auf, der mit der ersten Steuerleitung 52 verbunden ist. An einem zweiten Steuereingang S2, der dem ersten Steuereingang S1 gegenüberliegt und diesem bei einer Druckbeaufschlagung entgegenwirkt, ist eine Feder 34 und die zweite Steuerleitung 54 angeschlossen. Das Ventil 36b weist noch einen dritten Steuereingang S3 auf, an dem eine dritte Steuerleitung 76 angeschlossen ist. Ein am dritten Steuereingang S3 anstehender Druck wirkt so wie ein am ersten Steuereingang S1 anstehender Druck. Beide Drücke wirken einem am zweiten Steuereingang S2 anstehenden Druck und der Federkraft der Feder 34 entgegen.

Die dritte Steuerleitung 76 ist am ersten Anschluß A1 des Schaltventils 68b angeschlossen. In den Schaltstellungen P, R, N ist der erste Anschluß A1 mit dem zweiten Anschluß A2 verbunden. In der Schaltstellung D ist der erste Anschluß A1 mit einem Tankanschluß T verbunden, der zweite Anschluß A2 ist hierbei verschlossen, was auch in der Schaltstellung R vorgesehen sein kann. Sind Mittel vorgesehen, die den Betriebszustand P bzw. die Schaltstellung P des Schaltventils 68 nur bei Stillstand des Fahrzeugs ermögliche, so kann dies auch im Betriebszustand P bzw. in der Schaltstellung P des Schaltventils 68b vorgesehen sein.

Am zweiten Anschluß A2 des Schaltventils 68b ist eine Leitung 78 angeschlossen, die mit der zweiten Steuerleitung 54 verbunden ist. Zwischen der zweiten Steuerleitung 54 und der Leitung 62 ist eine Verbindungsleitung 80 vorgesehen, in der vorzugsweise eine Drossel 82 vorgesehen ist.

Beim dritten Ausführungsbeispiel ist somit vorgesehen, daß an der Zwischenleitung 38 oder der Versorgungsleitung 28 die Abzweigleitung 60 angeschlossen ist, die mit der Hydraulikleitung 56' bzw. der zweiten Steuerleitung 54, 54' verbunden ist. Die Leitungen 60, 54, 54' sind der Drosselstelle 50 in Förderrichtung nachgeschaltet. Weiterhin zweigt zwischen der Drossel 82 und der Drosselstelle 50 eine Leitung - in diesem Fall die zweite Steuerleitung 54 - ab, die an den zweiten Steuereingang S2 des Ventils 36b führt.

Weiterhin ist vorgesehen, daß zwischen der Drossel 82 und der Drosselstelle 50 eine Leitung - im vorliegenden Ausführungsbeispiel die Leitung 78, die von der zweiten Steuerleitung 54 abzweigt - angeschlossen ist, die an den zweiten Anschluß A2 des Schaltventils 68b führt, der in den Schaltstellungen P und N sowie gegebenenfalls R mit dem ersten Anschluß A1 verbunden ist, an dem die Steuerleitung 76 angeschlossen ist. Die dritte Steuerleitung 76 ist mit einem dritten Steuereingang S3 des Ventils 36b verbunden. Der erste Anschluß A1 des Schaltventils 68b schließlich ist in der Schaltstellung D mit einem Tankanschluß T verbunden.

Eine Verstellung der Übersetzungsverhältnisses des Getriebes 12 Richtung "Low" erfolgt bei diesem Ausführungsbeispiel zum Beispiel nur im Betriebszustand D bzw. in der Schaltstellung D. Hierbei wird der Druck im Kolbenraum 24 der ersten Verstellvorrichtung 14 über die Versorgungsleitung 28, die Abzweigleitung 60, das Umschaltventil 58, die Drossel 82, die zweite Steuerleitung 54 und die Hydraulikleitung 56' auf den Druckanschluß D des zusätzlichen Druckbegrenzungsventils 66 geleitet. Der Druck des Kolbenraums 24 der ersten Verstellvorrichtung 14, der an der Drossel 82 ansteht, wird durch die Drossel 82 so reduziert, daß über das Druckbegrenzungsventil 66 das erforderliche Ölvolumen zur Verstellung des Getriebes 12 Richtung "Low" ablaufen kann. Die Größe der Drossel 82 ist dabei in Abhängigkeit der erforderlichen bzw. gewünschten Geschwindigkeit für die Verstellung des Getriebes 12 zu bemessen.

In den Schaltstellungen bzw. Betriebszuständen P, R, N wird der dritte Steuereingang S3 des Ventils 36b über die dritte Steuerleitung 76 und die Leitung 78 mit Druck beaufschlagt, wodurch die Drehzahl, bei der das Ventil 36b schließt, deutlich abgesenkt wird und eine unerwünschte Verstellung des Übersetzungsverhältnisses des Getriebes 12 im Leerlauf des Motors Richtung "Low" verhindert wird. Der durch die Drossel 82 reduzierte Druck des Kolbenraumes 24 der ersten Verstellvorrichtung 14 steht hierbei sowohl am zweiten Steuereingang S2 als auch am dritten Steuereingang S3 des Ventils 36b an. Die resultierenden Druckkräfte wirken sich entgegen. Die Druckkraft, die aus dem am ersten Steuereingang S1 anstehenden Druck resultiert, wirkt ebenfalls der am zweiten Steuereingang S2 anstehenden Druckkraft entgegen. Da über das Druckbegrenzungsventil 66, insbesondere bei niedrigen Drehzahlen des Motors, Öl aus dem Kolbenraum 26 entweichen kann, sind die Druckkräfte so zu bemessen, daß bei einer beginnenden Verstellung des Übersetzungsverhältnisses des Getriebes 12 Richtung "Low" das Ventil 36b in die Regelstellung I gebracht wird, wodurch wieder ein von der ersten Pumpe 42 erzeugter hoher Druck an den Kolbenraum 24 der ersten Verstellvorrichtung 14 geleitet wird. Dadurch wird das Übersetzungsverhältnis des Getriebes 12 wieder Richtung "Overdrive" verstellt.

Wesentlich beim dritten Ausführungsbeispiel ist, daß zusätzliche Mittel vorgesehen sind, die eine Verstellung des Getriebes 12 in Richtung "Low" zumindest im Betriebszustand Rückwärtsfahrt verhindern. Dies zu verhindern, ist jedoch auch im Betriebszustand Parken vorteilhaft. Gegebenenfalls kann dies ebenfalls im Betriebszustand Rückwärtsfahrt zweckmäßig sein. Mit den zusätzlichen Mitteln wird ein hohes Druckniveau zu dem des Kolbenraumes 24 der ersten Verstellvorrichtung 13 geschaltet. Dies erfolgt im wesentlichen die Ventile 36b, 68b, wobei über das Ventil 68b und die Leitungen 54, 78, 76 das Ventil 36b so mit Druck beaufschlagt wird, das es das hohe Druckniveau zu dem des Kolbenraumes 24 der ersten Verstellvorrichtung 14 schaltet.

Andererseits kann auch gesagt werden, daß die zusätzlichen Mittel eine Verstellung des Getriebes 12 in Richtung "Low" nur im Betriebszustand Vorwärtsfahrt ermöglichen. Eine solche Verstellung im Betriebszustand Rückwärtsfahrt R ist jedoch auch möglich. Ist eine Einrichtung vorgesehen, die den Betriebszustand Parken P bzw. die Schaltstellung P des Schaltventils 68b nur bei Stillstand des Fahrzeugs ermöglicht, so kann die Verstellung auch hier erfolgen. Die zusätzlichen Mittel sind im wesentlichen die Leitungen 60, 54, 56, 82, die bei den entsprechenden Betriebszuständen Vorwärtsfahrt D sowie gegebenenfalls Rückwärtsfahrt R und eventuell Parken P mit dem Druckbegrenzungsventil 66 verbunden sind.

Es sei noch eine weitere Möglichkeit erläutert, mit der zumindest im Betriebszustand Neutral insbesondere ein unerwünscht schnelles Verstellen des Getriebes 12 in Richtung "Low" weitestgehend vermieden wird. Eine solche Hydrauliksteuerung für ein stufenlos veränderliches Getriebe 12, kann weitestgehend ebenfalls so wie die Hydrauliksteuerung 10 gemäß Figur 1 aufgebaut sein. Es sind jedoch im Gegensatz zu den bereits erläuterten Mitteln, die zumindest im Betriebszustand Neutral eine Verstellung des Getriebes 12 in Richtung "Low" verhindern, zusätzliche Mittel für eine an die Abnahme einer Geschwindigkeit des Fahrzeugs angepaßten Verstellung des Getriebes 12 in Richtung "Low" zumindest im Betriebszustand Neutral vorgesehen. Dies kann auch für den Betriebszustand Parken und gegebenenfalls für den Betriebszustand Rückwärtsfahrt vorgesehen sein.

Wird bei einem Fahrzeug, das eine bestimmte Geschwindigkeit aufweist, vom Betriebszustand Vorwärtsfahrt oder Rückwärtsfahrt in den Betriebszustand Neutral geschaltet, so nimmt die Geschwindigkeit auf einer ebenen Strecke, wenn nicht gebremst wird und außer bei einer Bergabfahrt, nach einer bestimmten Funktion ab. Diese Funktion richtet sich im wesentlichen nach der Geschwindigkeit, dem Gewicht, dem Luftwiderstand, dem Rollwiderstand usw. des Fahrzeugs. Wird im Betriebszustand Neutral nicht genügend Gas gegeben, was insbesondere im Leerlauf der Fall ist, so kann Öl aus dem Kolbenraum 24 der ersten Verstellvorrichtung entweichen, wodurch das Getriebe 12 in Richtung "Low" verstellt wird. Das Entweichen des Öls aus dem Kolbenraum 24 und somit das Verstellen des Getriebes 12 in Richtung "Low" kann nun so verlangsamt werden, daß bei einem erneuten Schalten in den Betriebszustand Vorwärtsfahrt oder Rückwärtsfahrt das Getriebe 12 eine Übersetzung hat, die keine abrupte Erhöhung der Drehzahl des Motors und somit kein schlagartiges Abbremsen des Fahrzeugs zur Folge hat. Ein zweckmäßiges Mittel hierfür ist zum Beispiel eine zusätzliche Drossel, die in einer Leitung angeordnet wird, die zumindest im Betriebszustand Neutral, gegebenenfalls im Betriebszustand Parken und eventuell Rückwärtsfahrt so zugeschaltet wird, daß das Öl aus dem Kolbenraum 24 auf ein niedrigeres Druckniveau, beispielsweise einen Tank T, geführt wird. Alternativ kann das Öl auch auf ein Druckbegrenzungsventil mit einem entsprechenden Druckniveau geführt werden.

Die fahrzeugspezifischen Werte für die Größe der Drossel lassen sich im Rahmen einiger Versuche ermitteln. Hierzu wird zum Beispiel bei einem Fahrzeug bei verschiedenen Geschwindigkeiten, insbesondere auf einer ebenen Strecke, von Vorwärtsfahrt nach Neutral geschaltet. Dann wird die Veränderung der Geschwindigkeit des Fahrzeugs über der Zeit gemessen. Wird dies noch bei verschiedenen Gewichten des Fahrzeugs gemacht, so lassen sich mehrere Kurven ermitteln, die die Abnahme der Geschwindigkeit über der Zeit wiedergeben. Hieraus wird eine Drossel ermittelt, die einer über der Zeit ähnlichen bzw. angepaßten Verstellung des Getriebes 12 in Richtung "Low" dient. Wird nun wieder zu einem bestimmten Zeitpunkt von Neutral nach Vorwärtsfahrt geschaltet, so hat dies keine abrupte Verzögerung des Fahrzeugs zur Folge, da das erreichte Übersetzungsverhältnis des Getriebes 12 der Geschwindigkeit des Fahrzeugs angepaßt ist.

Die Auswahl der Drossel und somit die Zeit der Verstellung des Getriebes 12 in Richtung "Low" kann nach verschiedenen Gesichtspunkten erfolgen. Dies können verbrauchsoptimierte Aspekte sein oder Übersetzungsverhältnisse, die von Insassen des Fahrzeugs als komfortabel empfunden werden. Auch ist es möglich die Verstellung in Richtung "Low" so einzustellen, daß beim Schalten in den Betriebszustand Vorwärtsfahrt oder Rückwärtsfahrt ein möglichst großes Drehmoment zur Verfügung steht. Eine Verstellung des Getriebes 12 in Richtung "Low" wird in der Regel aber sehr langsam bzw. verzögert erfolgen.

## Patentansprüche

1. Hydrauliksteuerung (10, 10a, 10b) für ein stufenlos veränderliches Getriebe (12), insbesondere für ein Doppelkegelscheiben-Umschlingungsgetriebe, zumindest beim Ausfall der elektrischen Versorgung einer elektrohydraulischen Steuerung des stufenlosen Getriebes (12), wobei Mittel (36, 36a, 36b, 44, 50, 68, 68b) vorgesehen sind, die zumindest im Betriebszustand Vorwärtsfahrt eine Verstellung des Getriebes (12) in Richtung "Low" sowie "Overdrive" in einer Schaltstellung (D) ermöglichen und einer Verhinderung einer Verstellung des Getriebes (12) in Richtung "Low" zumindest im Betriebszustand Neutral dienen.

2. Hydrauliksteuerung (10, 10a, 10b) für ein stufenlos veränderliches Getriebe (12), insbesondere für ein Doppelkegelscheiben-Umschlingungsgetriebe, zumindest beim Ausfall der elektrischen Versorgung einer elektrohydraulischen Steuerung des stufenlosen Getriebes (12) mit mindestens einer ersten Pumpe (42) zur Beaufschlagung der Kolbenräume (24, 26) einer ersten und zweiten Verstellvorrichtung (14, 16) zur Übersetzungsänderung des Getriebes (12), wobei Mittel (36, 36a, 36b, 44, 50, 68, 68b) vorgesehen sind, die zumindest im Betriebszustand Vorwärtsfahrt eine Verstellung des Getriebes (12) in Richtung "Low" sowie "Overdrive" in einer Schaltstellung (D) ermöglichen und einer an eine Abnahme einer Geschwindigkeit des Fahrzeugs angepaßte Verstellung des Getriebes (12) in Richtung "Low" zumindest im Betriebszustand Neutral dienen.

3. Hydrauliksteuerung (10, 10a, 10b) nach Anspruch 1 oder 2, **dadurch gekennzeichnet, daß** zusätzliche Mittel (36, 36a, 36b, 44, 50, 68, 68b) vorgesehen sind, die eine Verstellung des Getriebes (12) in Richtung "Low" zumindest im Betriebszustand Neutral und Parken verhindern.

4. Hydrauliksteuerung (10, 10a, 10b) nach Anspruch 1 oder 3, **dadurch gekennzeichnet, daß** zusätzliche Mittel (36, 36a, 36b, 44, 50, 68, 68b) vorgesehen sind, die eine Verstellung des Getriebes (12) in Richtung "Low" in den Betriebszuständen Neutral, Parken und Rückwärtsfahrt verhindern.

5. Hydrauliksteuerung (10, 10a, 10b) nach einem der Ansprüche 1 bis 3, **dadurch gekennzeichnet, daß** zusätzliche Mittel (36, 36a, 36b, 44, 50, 68, 68b) vorgesehen sind, die im Betriebszustand Rückwärtsfahrt eine Verstellung des Getriebes (12) in Richtung "Low" und "Overdrive" in einer Schaltstellung (R) ermöglichen.

6. Hydrauliksteuerung (10, 10a, 10b) nach einem der Ansprüche 1 bis 5, **dadurch gekennzeichnet, daß** wenigstens ein Ventil (36, 36a, 36b) zur Steuerung des Druckes in dem mindestens einen Kolbenraum (24) der ersten Verstellvorrichtung (14) vorgesehen ist, das zumindest beim Ausfall der elektrischen Versorgung einer elektrohydraulischen Steuerung des stufenlosen Getriebes (12) mit einem an einer Drosselstelle (50) erzeugten, von der Drehzahl eines die Pumpe (42) antreibenden Motors abhängigen Druckgefälle steuerbar ist.

7. Hydrauliksteuerung (10, 10a, 10b) nach einem der Ansprüche 1 bis 6, **dadurch gekennzeichnet, daß** eine Vorrichtung für die Betriebszustände Parken, Rückwärtsfahrt, Neutral und Vorwärtsfahrt, insbesondere ein Schaltventil (68, 68b), vorzugsweise ein Handschaltventil, mit mindestens vier Schaltstellungen (P, R, N, D) für die Betriebszustände Parken, Rückwärtsfahrt, Neutral und Vorwärtsfahrt vorgesehen ist.

8. Hydrauliksteuerung (10) nach einem der Ansprüche 1 bis 7, **dadurch gekennzeichnet, daß** in der zweiten Regelstellung (II) des Ventils (36) die nachgeschaltete Leitung (28, 38) am Anschluß (A) des Ventils (36) mit einem Abflußanschluß (A') des Ventils (36) verbunden ist, daß der Abflußanschluß (A') über eine Leitung (70), in der vorzugsweise eine Drossel (72) angeordnet ist, mit einem ersten Anschluß (A1) des Schaltventils (68) verbunden ist, der in den Schaltstellungen (P) und (N) verschlossen ist und der wenigstens in der Schaltstellung (D) mit einem zweiten Anschluß (A2), der zu einem Tank (T) führt, verbunden ist.

9. Hydrauliksteuerung (10a, 10b) nach einem der Ansprüche 1 bis 8, **dadurch gekennzeichnet, daß** in der zweiten Regelstellung (II) des Ventils (36a, 36b) der Anschluß (A) verschlossen ist.

10. Hydrauliksteuerung (10a, 10b) nach Anspruch 9, **dadurch gekennzeichnet, daß** an einer dem Ventil (36a, 36b) nachgeschalteten Leitung (28, 38) eine Abzweigleitung (60, 74) angeschlossen ist, die mit einem ersten Anschluß (A1) des Schaltventils (68, 68b) verbunden ist, vor dem vorzugsweise eine Drossel (72) vorgesehen ist, der wenigstens in den Schaltstellungen (P) und (N) verschlossen ist und der wenigstens in der Schaltstellung (D) mit einem zweiten Anschluß (A2) verbunden ist, der zu einem Tank (T) führt.

11. Hydrauliksteuerung (10b) nach Anspruch 10, **dadurch gekennzeichnet, daß** an einer dem Ventil (36b) nachgeschalteten Leitung (28, 38) eine Leitung (60) angeschlossen ist, die über eine Zwischenleitung (80) mit einer Leitung (54, 56') verbunden ist, die der Drosselstelle (50) in Förderrichtung nachgeschaltet ist und daß in der Zwischenleitung (80) eine Drossel (82) angeordnet ist.

12. Hydrauliksteuerung (10b) nach Anspruch 11, **dadurch gekennzeichnet, daß** zwischen der Drossel (82) und der Drosselstelle (50) eine Steuerleitung (54) abzweigt, die an einen zweiten Steuereingang (S2) des Ventils (36b) führt.

13. Hydrauliksteuerung (10b) nach Anspruch 12, **dadurch gekennzeichnet, daß** zwischen der Drossel (82) und der Drosselstelle (50) eine Leitung (54, 60) angeschlossen ist, die an einen zweiten Anschluß (A2) des Schaltventils (68b) führt, die in den Schaltstellungen (P, R und N) mit einem ersten Anschluß (A1) verbunden ist, an dem eine Steuerleitung (76) angeschlossen ist, die mit einem dritten Steuereingang (S3) des Ventils (36b) verbunden ist und daß der Anschluß (A) des Ventils (36b) in der Schaltstellung (D) mit einem Tankanschluß (T) verbunden ist.

14. Hydrauliksteuerung (10, 10a, 10b) nach einem der Ansprüche 1 bis 13, **dadurch gekennzeichnet, daß** eine Versorgungsleitung (30) des Kolbenraums (26) der zweiten Verstellvorrichtung (16) mit einem Druckanschluß (D) eines Druckbegrenzungsventils (44) verbunden ist, an dessen ersten Steuereingang (S1) eine Feder (34) vorhanden ist und an dessen zweiten Steuereingang (S2) eine elektrische oder hydraulische Betätigung sowie eine Rückführleitung (48), die mit der Versorgungsleitung (30) in Verbindung steht, vorgesehen ist.

15. Hydrauliksteuerung (10, 10a, 10b) nach einem der Ansprüche 1 bis 14, **dadurch gekennzeichnet, daß** die Drosselstelle (50) in einem Umschaltventil (58) mit zwei Schaltstellungen (I, II) angeordnet ist, daß an einem ersten Steuereingang (S1) des Umschaltventils (58) eine Feder (34) und an dessen zweiten Steuereingang (S2) eine elektrische oder hydraulische Betätigung vorgesehen ist, daß das Umschaltventil (58) mindestens einen ersten Druckanschluß (D1) und einen ersten Anschluß (A1) aufweist, die in der ersten Schaltstellung (I) über die Drosselstelle (50) und in der zweiten Schaltstellung (II) über eine im wesentlichen druckabfallfreie Verbindung miteinander verbunden sind, daß eine erste Steuerleitung (52) vorgesehen ist, die in Förderrichtung vor dem Umschaltventil (58) angeschlossen ist und mit dem ersten Steuereingang (S1) des Ventils (36, 36a, 36b) verbunden ist, und in Förderrichtung nach dem Umschaltventil (58) eine Leitung (54, 54') angeordnet ist, die mit dem zweiten Steuereingang (S2) des Ventils (36, 36a, 36b) verbunden ist.

16. Hydrauliksteuerung (10, 10a, 10b) nach Anspruch 15, **dadurch gekennzeichnet, daß** die Steuerleitung (54'), die in Förderrichtung dem Umschaltventil (58) nachgeschaltet ist, mit einem zweiten Druckanschluß (D2) des Umschaltventils (58) verbunden ist, der in der ersten Schaltstellung (I) mit einem zweiten Anschluß (A2) in Verbindung steht, der über die zweite Steuerleitung (54) mit dem zweiten Steuereingang (S2) des Ventils (36, 36a, 36b) verbunden ist, daß der zweite Druckanschluß (D2) in der zweiten Schaltstellung (II) des Umschaltventils (58) verschlossen ist, daß das Umschaltventil (58) einen Tankanschluß (T) aufweist, der in der ersten Schaltstellung (I) verschlossen ist und in der zweiten Schaltstellung (II) mit dem zweiten Anschluß (A2) in Verbindung steht.

17. Hydrauliksteuerung (10, 10a, 10b) nach Anspruch 15 oder 16, **dadurch gekennzeichnet, daß** eine Abzweigleitung (60), die mit dem Kolbenraum (24) der ersten Verstellvorrichtung (14) in Verbindung steht, an einem dritten Druckanschluß (D3) des Umschaltventils (58) angeschlossen ist, der in der ersten Schaltstellung (I) mit einem dritten Anschluß (A3) in Verbindung steht und der in der zweiten Schaltstellung (II) verschlossen ist, daß der dritte Anschluß (A3) über eine Leitung (62) mit dem zweiten Steuereingang (S2) des Druckbegrenzungsventils (44) verbunden ist und daß in der zweiten Schaltstellung (II) des Umschaltventils (58) der dritte Anschluß (A3) mit dem Tankanschluß (T) des Umschaltventils (58) verbunden ist.

18. Hydrauliksteuerung (10, 10a, 10b) nach einem der Ansprüche 1 bis 17, daß mindestens eine erste Pumpe (42) zur Beaufschlagung der Kolbenräume (24, 26) einer ersten und zweiten Verstellvorrichtung (14, 16) zur Übersetzungsänderung des Getriebes (12) vorgesehen ist.

19. Hydrauliksteuerung (10, 10a, 10b) Anspruch 18, **dadurch gekennzeichnet, daß** die Drosselstelle (50) mindestens einer zweiten Pumpe (64) nachgeschaltet ist, die einen niedrigeren Druckbereich erzeugt als die mindestens erste Pumpe (42).

20. Hydrauliksteuerung (10, 10a, 10b) nach Anspruch 19, **dadurch gekennzeichnet, daß** die mindestens erste Pumpe (42) eine Hochdruckpumpe ist und die mindestens zweite Pumpe (64) eine Niederdruckpumpe.

21. Hydrauliksteuerung (10, 10a, 10b) nach einem der Ansprüche 1 bis 19, **dadurch gekennzeichnet, daß** der Drosselstelle (50) ein zusätzliches Druckbegrenzungsventil (66) nachgeschaltet ist.

22. Hydrauliksteuerung (10, 10a, 10b) nach einem der Ansprüche 1 bis 21, **dadurch gekennzeichnet, daß** das Ventil (36, 36a, 36b) auch für den Normalbetrieb der Hydrauliksteuerung (10, 10a, 10b) verwendet wird.

23. Hydrauliksteuerung (10, 10a, 10b) nach einem der Ansprüche 1 bis 22, **dadurch gekennzeichnet, daß** das Ventil (36, 36a, 36b) für den Notbetrieb und ein Ventil (32) für den Normalbetrieb vorgesehen ist.

## Claims

1. Hydraulic control (10,10a,10b) for a continuously variable transmission (12), in particular for a double-conical-disc wrap-around transmission, at least in the event of the failure of the electrical supply of an electrohydraulic control of the continuously variable transmission (12), means (36,36a,36b,44,50,68,68b) being provided, which, at least in the forward-driving operating state, make it possible to adjust the transmission (12) in the "low" and "overdrive" direction in a shift position (D) and, at least in the neutral operating state, serve for preventing adjustment of the gear (12) in the "low" direction.

2. Hydraulic control (10,10a,10b) for continuously variable transmission (12), in particular for a double-conical-disc wrap-around transmission, at least in the event of the failure of the electrical supply of an electrohydraulic control of the continuously variable transmission (12), with at least one first pump (42) for acting upon the piston spaces (24,26) of a first and a second adjusting device (14,16) for changing the ratio of the transmission (12), means (36,36a,36b,44,50,68,68b) being provided, which, at least in the forward-driving operating state, make it possible to adjust the transmission (12) in the "low" and "overdrive" direction in a shift position (D) and, at least in the neutral operating state, serve for adjusting the transmission (12) in the "low" direction in adaptation to a decrease in a speed of the vehicle.

3. Hydraulic control (10,10a,10b) according to Claim 1 or 2, **characterized in that** additional means (36,36a,36b,44,50,68,68b) are provided, which, at least in the neutral and parking operating states, prevent an adjustment of the transmission (12) in the "low" direction.

4. Hydraulic control (10,10a,10b) according to Claim 1 or 3, **characterized in that** additional means (36,36a,36b,44,50,68,68b) are provided, which, in the neutral, parking and reversing operating states, prevent an adjustment of the transmission (12) in the "low" direction.

5. Hydraulic control (10,10a,10b) according to one of Claims 1 to 3, **characterized in that** additional means (36,36a,36b,44,50,68,68b) are provided, which, in the reversing operating state, make it possible to adjust the transmission (12) in the "low" and "overdrive" direction in a shift position (R).

6. Hydraulic control (10,10a,10b) according to one of Claims 1 to 5, **characterized in that** at least one valve (36,36a,36b) for controlling the pressure in the at least one piston space (24) of the first adjusting device (14) is provided, which, at least in the event of the failure of the electrical supply of an electrohydraulic control of the continuously variable transmission (12), is capable of being controlled by means of a pressure gradient generated at a throttle point (50) and dependent on the rotational speed of a motor driving the pump (42).

7. Hydraulic control (10,10a,10b) according to one of Claims 1 to 6, **characterized in that** a device for the parking, reversing, neutral and forward-driving operating states, in particular a shift valve.(68,68b), preferably a manual-shift valve, with at least four shift positions (P,R,N,D) for the parking, reversing, neutral and forward-driving operating states, is provided.

8. Hydraulic control (10) according to one of Claims 1 to 7, **characterized in that**, in the second regulating position (II) of the valve (36), the downstream line (28,38) is connected, at the connection (A) of the valve (36), to an outflow connection (A') of the valve (36), and **in that** the outflow connection (A') is connected, via a line (70) in which preferably a throttle (72) is arranged, to a first connection (A1) of the shift valve (68), said first connection being closed in the shift positions (P) and (N) and being connected, at least in the shift position (D), to a second connection (A2) which leads to a tank (T).

9. Hydraulic control (10a,10b) according to one of Claims 1 to 8, **characterized in that**, in the second regulating position (II) of the valve (36a,36b), the connection (A) is closed.

10. Hydraulic control (10a,10b) according to Claim 9, **characterized in that** a branch line (60,74) is connected to a line (28,38) located downstream of the valve (36a,36b) and is connected to a first connection (A1) of the shift valve (68,68b), upstream of which is preferably provided a throttle (72) which, at least in the shift positions (P) and (N), is closed and, at least in the shift position (D), is connected to a second connection (A2) which leads to a tank (T).

11. Hydraulic control (10b) according to Claim 10, **characterized in that** a line (60) is connected to a line (28,38) located downstream of the valve (36b) and is connected via an intermediate line (80) to a line (54,56') which is located downstream of the throttle point (50) in the conveying direction, and **in that** a throttle (82) is arranged in the intermediate line (80).

12. Hydraulic control (10b) according to Claim 11, **characterized in that** a control line (54) branches off between the throttle (82) and the throttle point (50) and leads to a second control inlet (S2) of the valve (36b).

13. Hydraulic control (10b) according to Claim 12, **characterized in that** a line (54,60) is connected between the throttle (82) and the throttle point (50) and leads to a second connection (A2) of the shift valve (68b) and, in the shift positions (P,R and N), is connected to a first connection (A1), to which is connected a control line (76) which is connected to a third control inlet (S3) of the valve (36b), and **in that**, in the shift position (D), the connection (A) of the valve (36b) is connected to a tank connection (T).

14. Hydraulic control (10,10a,10b) according to one of Claims 1 to 13, **characterized in that** a supply line (30) of the piston space (26) of the second adjusting device (16) is connected to a pressure connection (D) of a pressure-limiting valve (44), at the first control inlet (S1) of which a spring (34) is present and at the second control inlet (S2) of which are provided electric or hydraulic actuation and a return line (48) which is connected to the supply line (30).

15. Hydraulic control (10,10a,10b) according to one of Claims 1 to 14, **characterized in that** the throttle point (50) is arranged in a change-over valve (58) with two switching positions (I,II), **in that** a spring (34) is provided at a first control inlet (S1) of the change-over valve (58) and at its second control inlet (S2) is provided electrical or hydraulic actuation, **in that** the change-over valve (58) has at least one first pressure connection (D1) and one first connection (A1) which are connected to one another, in the first switching position (I), via the throttle point (50) and, in the second switching position (II), via a connection essentially free of pressure drop, and **in that** a first control line (52) is provided, which is connected upstream of the change-over valve (58) in the conveying direction and is connected to the first control inlet (S1) of the valve (36,36a,36b), and downstream of the change-over valve (58) in the conveying direction is arranged a line (54,54') which is connected to the second control inlet (S2) of the valve (36,36a,36b).

16. Hydraulic control (10,10a,10b) according to Claim 15, **characterized in that** the control line (54') which is located downstream of the change-over valve (58) in the conveying direction is connected to a second pressure connection (D2) of the change-over valve (58), which, in the first switching position (I), is connected to a second connection (A2) which is connected via the second control line (54) to the second control inlet (S2) of the valve (36,36a,36b), **in that**, in the second switching position (II) of the change-over valve (58), the second pressure connection (D2) is closed, and **in that** the change-over valve (58) has a tank connection (T) which, in the first switching position (I), is closed and, in the second switching position (II), is connected to the second connection (A2).

17. Hydraulic control (10,10a,10b) according to Claim 15 or 16, **characterized in that** a branch line (60), which is connected to the piston space (24) of the first adjusting device (14), is connected to a third pressure connection (D3) of the change-over valve (58), which, in the first switching position (I), is connected to a third connection (A3) and, in the second switching position (II), is closed, **in that** the third connection (A3) is connected via a line (62) to the second control inlet (S2) of the pressure-limiting valve (44), and **in that**, in the second switching position (II) of the change-over valve (58), the third connection (A3) is connected to the tank connection (T) of the change-over valve (58).

18. Hydraulic control (10,10a,10b) according to one of Claims 1 to 17, **characterized in that** at least one first pump (42) for acting upon the piston spaces (24,26) of a first and a second adjusting device (14,16) for changing the ratio of the transmission (12) is provided.

19. Hydraulic control (10,10a,10b) according to Claim 18, **characterized in that** the throttle point (50) is located downstream of at least one second pump (64) which generates a lower pressure range than the at least one first pump (42).

20. Hydraulic control (10,10a,10b) according to Claim 19, **characterized in that** the at least one first pump (42) is a high-pressure pump and the at least one second pump (64) is a low-pressure pump.

21. Hydraulic control (10,10a,10b) according to one of Claims 1 to 19, **characterized in that** the throttle point (50) is followed by an additional pressure-limiting valve (66).

22. Hydraulic control (10,10a,10b) according to one of Claims 1 to 21, **characterized in that** the valve (36,36a,36b) is also used for the normal operation of the hydraulic control (10,10a,10b).

23. Hydraulic control (10,10a,10b) according to one of Claims 1 to 22, **characterized in that** the valve (36,36a,36b) is provided for emergency operation and a valve (32) is provided for normal operation.

## Revendications

1. Commande hydraulique (10, 10a, 10b) pour une transmission à variation continue (12), notamment une transmission à courroie et poulie à double flasque conique, applicable au moins en cas de défaillance de l'alimentation électrique d'une commande électro-hydraulique de la transmission à variation continue (12),
**caractérisée en ce qu'**
elle comprend des moyens (36, 36a, 36b, 44, 50, 68, 68b) qui au moins dans l'état de fonctionnement "marche avant" permettent un réglage de la transmission à variation continue (12) dans la direction "bas" ainsi que "surmultipliée" dans une position de commutation D, et évitent ce réglage de la transmission (12) dans la direction "bas" au moins dans l'état de fonctionnement "neutre".

2. Commande hydraulique (10, 10a, 10b) pour une transmission à variation continue (12), notamment une transmission à courroie et poulie à double flasque conique, applicable au moins en cas de défaillance d'alimentation électrique d'une commande électro-hydraulique de la transmission à variation continue (12), comportant au moins une première pompe (42) pour alimenter les chambres de piston (24, 26) d'un premier et d'un second actionneur (14, 16) pour modifier le rapport de démultiplication de la transmission (12),
**caractérisée par**
des moyens (36, 36a, 36b, 44, 50, 68, 68b) qui au moins dans l'état de fonctionnement "marche avant" permettent de régler la transmission (12) dans la direction "bas" et "surmultipliée" dans une position de commutation D, et servent à un réglage de la transmission (12) dans la direction "bas", adapté à une diminution de la vitesse du véhicule, au moins dans l'état de fonctionnement "neutre".

3. Commande hydraulique (10, 10a, 10b) selon les revendications 1 ou 2,
**caractérisée par**
des moyens supplémentaires (36, 36a, 36b, 44, 50, 68, 68b) qui évitent le réglage de la transmission (12) dans la direction "bas" au moins pour l'état de fonctionnement "neutre" et "rangement".

4. Commande hydraulique (10, 10a, 10b) selon la revendication 1 ou 3,
**caractérisée par**
des moyens supplémentaires (36, 36a, 36b, 44, 50, 68, 68b) qui évitent le réglage de la transmission (12) dans la direction "bas" pour des états de fonctionnement "neutre", "rangement" et "marche arrière".

5. Commande hydraulique (10, 10a, 10b) selon l'une des revendications 1 à 3,
**caractérisée par**
des moyens supplémentaires (36, 36a, 36b, 44, 50, 68, 68b) qui, pour l'état de fonctionnement "marche arrière" permettent un réglage de la transmission (12) dans la direction "bas" ou "surmultipliée" pour la position de commutation (R).

6. Commande hydraulique (10, 10a, 10b) selon l'une des revendications 1 à 5,
**caractérisée par**
au moins une vanne (36, 36a, 36b) pour commander la pression dans au moins une chambre de piston (24) du premier actionneur (14) qui, au moins en cas de défaillance d'alimentation électrique d'une commande électro-hydraulique de la transmission à variation continue (12) génère sur un point d'étranglement (50), une chute de pression dépendant de la vitesse de rotation du moteur entraînant la pompe (42).

7. Commande hydraulique (10, 10a, 10b) selon l'une des revendications 1 à 6,
**caractérisée par**
un dispositif pour les états de fonctionnement "rangement", "marche arrière", "neutre", "marche avant", notamment une vanne de commutation (68, 68b) de préférence une vanne de commutation manuelle ayant au moins quatre positions de commutation (P, R, N, D) pour les états de fonctionnement "rangement", "marche arrière", "neutre", "marche avant".

8. Commande hydraulique (10) selon l'une des revendications 1 à 7,
**caractérisée en ce que**
dans la seconde position de régulation (II) de la vanne (36), la conduite en aval (28, 38) est reliée au branchement (A) de la vanne (36) avec un branchement de sortie (A') de la vanne (36), et
le branchement de sortie (A') est relié par une conduite (70) munie de préférence d'un organe d'étranglement (72) à un premier branchement (A1) de la vanne de commutation (68) qui est fermée pour les positions de commutation (P) et (N) et qui, au moins dans la position de commutation (D), est reliée à un second branchement (A2) conduisant à un réservoir (T).

9. Commande hydraulique (10a, 10b) selon l'une des revendications 1 à 8,
**caractérisée en ce que**
dans la seconde position de régulation (II) de la vanne (36a, 36b), le branchement (A) est fermé.

10. Commande hydraulique (10a, 10b) selon la revendication 9,
**caractérisée en ce qu'**
à une conduite (28, 38) en aval de la vanne (36a, 36b) est reliée une à conduite de dérivation (60, 74), elle-même reliée à un premier branchement (A1) de la vanne de commutation (68, 68b), précédée de préférence d'un organe d'étranglement (72) qui est fermé au moins dans les positions de commutation (P) et (N) et qui au moins dans la position de commutation (D) est relié à un second branchement (A2) lui-même relié à un réservoir (T).

11. Commande hydraulique (10b) selon la revendication 10,
**caractérisée en ce qu'**
à une conduite (28, 38) en aval de la vanne (36b) est reliée une conduite (60), elle-même reliée par une conduite intermédiaire (80) à une conduite (54, 56') en aval du point d'étranglement (50) dans la direction de passage du fluide, et la conduite intermédiaire (80) comporte un organe d'étranglement (82).

12. Commande hydraulique (10b) selon la revendication 11,
**caractérisée en ce qu'**
entre l'organe d'étranglement (82) et le point d'étranglement (50) dérive une conduite de commande (54) aboutissant à la seconde entrée de commande (S2) de la vanne (36b).

13. Commande hydraulique (10b) selon la revendication 12,
**caractérisée en ce qu'**
entre l'organe d'étranglement (82) et le point d'étranglement (50), une conduite (54, 60) est branchée aboutissant à un second branchement (A2) de la vanne de commutation (68b), et reliée à un premier branchement (A1) pour les positions de commutation (P, R, N), branchement auquel est reliée une conduite de commande (76), elle-même reliée à une troisième entrée de commande (S3) de la vanne (36b) et le branchement (A) de la vanne (36b), est relié au branchement de réservoir (T) pour la position de commutation (D).

14. Commande hydraulique (10, 10a, 10b) selon l'une des revendications 1 à 13,
**caractérisée par**
une conduite d'alimentation (30) de la chambre de piston (26) du second actionneur (16), relié à un branchement de pression (D) d'une soupape de limitation de pression (44) dont la première entrée de commande (S1) comporte un ressort (34) et dont la seconde entrée de commande (S2) comporte un moyen d'actionnement électrique ou hydraulique ainsi qu'une conduite de retour (48) communiquant avec la conduite d'alimentation (30).

15. Commande hydraulique (10, 10a, 10b) selon l'une des revendications 1 à 14,
**caractérisée en ce que**
le point d'étranglement (50) est prévu dans une vanne d'inversion (58) à deux positions de commutation (I, II), la première entrée de commande (S1) de la vanne d'inversion (58) comporte un ressort (34) et la seconde entrée de commande (S2) comporte un moyen d'actionnement électrique ou hydraulique
la vanne d'inversion (58) comporte au moins un premier branchement de pression (D1) et un second branchement de pression (A1) qui, dans la première position de commutation (I) sont reliés par le point d'étranglement (50) et dans la seconde position de commutation (II), par une liaison pratiquement sans perte de charge,
et une première conduite de commande (52) est prévue, raccordée en amont de la vanne d'inversion (58) et reliée à la première entrée de commande (S1) de la vanne (36, 36a, 36b), et en aval de la vanne d'inversion (58) il est prévu une conduite (54, 54') reliée à la seconde entrée de commande (S2) de la vanne (36, 36a, 36b).

16. Commande hydraulique (10, 10a, 10b) selon la revendication 15,
**caractérisée en ce que**
la conduite de commande (54') qui est en aval de la vanne d'inversion (38) est reliée à un second branchement de pression (D2) de la vanne d'inversion (58), cette vanne communiquant dans la première position (I) avec le second branchement (A2) lui-même relié par la seconde conduite de commande (54) à la seconde entrée de commande (S2) de la vanne (36, 36a, 36b),
le second branchement de pression (D2) est fermé dans la seconde position de commutation (II) de la vanne de commutation (58), et
la vanne de commutation (58) comporte un branchement de réservoir (T) fermé pour la première position de commutation (I) et relié au second branchement (A2) dans la seconde position de commutation (II).

17. Commande hydraulique (10, 10a, 10b) selon la revendication 15 ou 16,
**caractérisée par**
une dérivation (60) reliée à la chambre de piston (24) du premier actionneur (14) à laquelle est relié un troisième branchement de pression (D3) de la vanne d'inversion (58) et qui, dans une première position de commutation (I) est reliée au troisième branchement (A3) et dans la seconde position de commutation (II), est fermée,
le troisième branchement (A3) est relié par une conduite (62) à la seconde entrée de commande (S2) de la vanne de limitation de pression (44) et
dans la seconde position de commutation (II) de la vanne d'inversion (58), le troisième branchement (A3) est relié au branchement de réservoir (T) de la vanne d'inversion (58).

18. Commande hydraulique (10, 10a, 10b) selon l'une des revendications 1 à 17,
**caractérisée par**
au moins une première pompe (42) pour alimenter les chambres de piston (24, 26) du premier et du second actionneur (14, 16) pour modifier le rapport de démultiplication de la transmission (12).

19. Commande hydraulique (10, 10a, 10b) selon la revendication 18,
**caractérisée en ce que**
le point d'étranglement (50) est prévu en aval d'au moins une seconde pompe (64) qui génère une pression dans une plage de pression plus faible que celle générée par la première pompe (42).

20. Commande hydraulique (10, 10a, 10b) selon la revendication 19,
**caractérisée en ce qu'**
au moins la première pompe (42) est une pompe haute pression et au moins la seconde pompe (64), une pompe basse pression.

21. Commande hydraulique (10, 10a, 10b) selon l'une des revendications 1 à 19,
**caractérisée en ce que**
le point d'étranglement (50) est suivi par une vanne de limitation de pression (66) supplémentaire.

22. Commande hydraulique (10, 10a, 10b) selon l'une des revendications 1 à 21,
**caractérisée en ce que**
la vanne (36, 36a, 36b) est également utilisée pour le mode de fonctionnement normal de la commande hydraulique (10, 10a, 10b).

23. Commande hydraulique (10, 10a, 10b) selon l'une des revendications 1 à 22,
**caractérisée en ce que**
la vanne (36, 36a, 36b) est prévue pour le fonctionnement de secours et une vanne (32) pour le fonctionnement normal.
